# EUROPÄISCHE PATENTSCHRIFT

(11) **EP 0 651 703 B1**
(45) Veröffentlichungstag und Bekanntmachung des Hinweises auf die Patenterteilung: **07.02.1996**
(21) Anmeldenummer: 93915669.1
(22) Anmeldetag: 22.07.1993
(51) Int. Cl.: B60C 27/06

(54) **GLEITSCHUTZKETTE**
ANTI-SLIP CHAIN
CHAINE ANTIDERAPANTE

(30) Priorität: 31.07.1992 DE 4225801
(43) Veröffentlichungstag der Anmeldung: 10.05.1995
(73) Patentinhaber: RUD-KETTENFABRIK RIEGER & DIETZ GMBH U. CO., D-73432 Aalen (DE)
(72) Erfinder: HOLZWARTH, Dietmar, Helmut, D-73525 Schwäbisch Gmünd (DE)
(74) Vertreter: Böning, Manfred, Dr.-Ing.
(86) Internationale Anmeldenummer: DE9300664
(87) Internationale Veröffentlichungsnummer: WO9403339

(56) Entgegenhaltungen:
- DE-B- 1 222 396
- DE-U- 9 016 761
- US-A- 1 548 955

## Beschreibung

Die Erfindung betrifft eine Gleitschutzkette für Fahrzeugzäder mit einem Laufnetz aus Spurkreuzen, deren im wesentlichen in Radumfangsrichtung orientierte Spurstücke derart durch im wesentlichen quer zur Radumfangsrichtung orientierte Verbindungsstücke außerhalb der Lauffläche des Fahrzeugrades mit seitlichen Halterungen verbunden sind, daß es beim Abrollen des mit ihr versehenen Fahrzeugrades zu Änderungen des Abstandes zwischen der Fahrbahnoberfläche und der Drehachse des Fahrzeugrades kommt.

Gleitschutzketten der vorstehenden Art sind in unterschiedlichsten Ausführungsformen bekannt. Ihr Laufnetz stellt eine Art Kompromiß dar, durch den man einerseits den Anforderungen an eine gute Spurführung und andererseits den Anforderungen an ausreichende Traktionseigenschaften zu genügen versucht, wobei für bestimmte Fahrbahnverhältnisse zusätzlich ein direkter Kontakt zwischen der Fahrbahn und des Reifenlauffläche als wünschenswert erachtet wird. Insbesondere die Erfüllung der zuletzt genannten Forderung bringt es mit sich, daß der Laufruhe von mit bekannten einschlägigen Gleitschutzketten ausgerüsteter Fahrzeugrädern gewisse Grenzen gesetzt sind. Darüber hinaus kann es insbesondere beim Einsatz derartiger Ketten für Personenkraftwagen in gewissen Geschwindigkeitsbereichen zu Resonanzerscheinungen mit dem Fahrgestell bzw. der Karosserie des jeweiligen Fahrzeuges kommen. Man hat sich bisher bemüht, der angedeuteten Problematik dadurch Herr zu werden, daß nah in Abhängigkeit vom jeweiligen Fahrzeugtyp die spurkreuzfreien Laufnetzabschnitte reduzierte oder zusätzliche in Radumfangsrichtung orientierte Laufnetzteile vorsah. Dies führt jedoch nicht nur zur Beeinträchtigung der Vortriebskräfte im Schnee, sondern auch zu einem höheren Gewicht und Preis der Gleitschutzkette.

Um Resonanzerscheinungen entgegenzuwirken, ist es aus der US,A,1548955 bekannt, bei einer Leiterkette die Größe der Intervalle zwischen den aufeinanderfolgenden Querkettensträngen zu variieren. Durch die Intervallgrößenveränderung lassen sich jedoch die originären, von der Gleitschutzkette in das Fahrzeugrad eingeleiteten Rüttelkräfte nicht eliminieren. Die angestrebte Ungleichmäßigkeit der Frequenz der Rüttelkräfte wirkt zwar dem Aufkommen von Resonanzerscheinungen entgegen, wird von den Fahrzeuginsassen aber als störender empfunden als eine gleichmäßige Rüttelfrequenz.

Der Erfindung liegt die Aufgabe zugrunde, eine Gleitschutzkette der in Betracht gezogenen Art so auszugestalten, daß sie ohne Beeinträchtigung der Ausgewogenheit ihrer Gleitschutzeigenschaften für unterschiedliche Fahrbahnverhältnisse und ohne Inkaufnahme störender, in das Fahrzeug eingeleiteter Rüttelkräfte die Gefahr eines Aufkommens von Resonanzerscheinungen am Fahrzeug auf ein Minimum reduziert. Diese Aufgabe wird erfindungsgemäß dadurch gelöst, daß die Länge der Spurstücke der in Radumfangsrichtung jeweils aufeinanderfolgenden Spurkreuze ungleich groß ist.

Die erfindungsgemäße Gleitschutzkette reduziert die Gefahr von Resonanzerscheinungen ohne eine Einbuße des Komforts, die Spurkreuzketten gegenüber Leiterketten bieten.

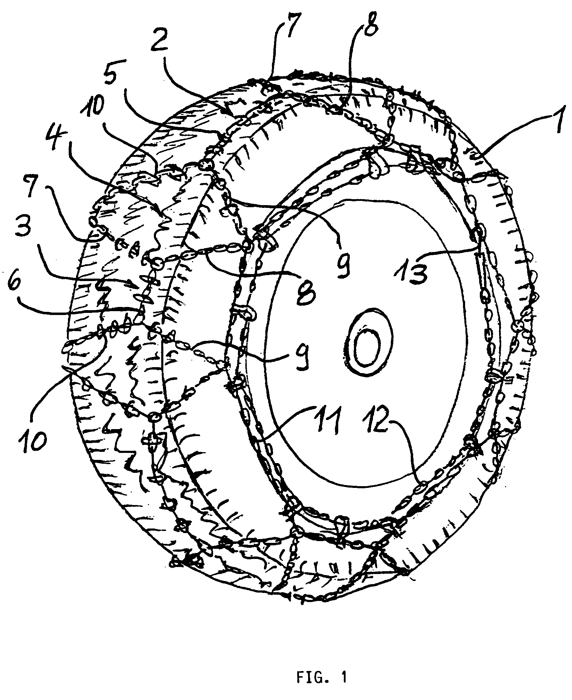

Die Erfindung wird im folgenden anhand der beigefügten Zeichnung näher erläutert.

Das Laufnetz der in der einzigen Figur dargestellten, auf ein Fahrzeugrad 1 montierten Gleitschutzkette weist Spurkreuze 2 und 3 und zwischen diesen angeordnete, spurkreuzfreie Abschnitte 4 auf. Die Spurkreuze 2 und 3 bestehen aus Spurstücken 5 und 6 unterschiedlicher Länge und aus jeweils gleich langen Verbindungsstücken 7,8,9,10, die die Spurstücke 5 und 6 mit seitlichen Halterungen verbinden, von denen in der Zeichnung nur die äußere Halterung 11 erkennbar ist. Zum Spannen der äußeren Halterung 11 dient eine Spannkette 12, die an ihrem Ende mit einem Haken 13 ausgestattet ist, der sich in ein Glied der von einer Seitenkette gebildeten äußeren Halterung 11 einhängen läßt. Durch die Verwendung von Spurstücken 5,6 ungleicher Länge werden Resonanzerscheinungen im Bereich des Fahrzeuges selbst dann bereits erfolgreich unterdrückt, wenn die ungleich langen Spurstücke 5,6 in gleichmäßigem Wechsel aufeinanderfolgen. Es ist also nicht unbedingt erforderlich, jedoch gleichwohl möglich und vorteilhaft, mehr als zwei unterschiedlich lange Spurstücke zu verwenden und diese in unregelmäßigem Wechsel aufeinanderfolgen zu lassen.

## Patentansprüche

1. Gleitschutzkette für Fahrzeugräder mit einem Laufnetz aus Spurkreuzen, deren im wesentlichen in Radumfangsrichtung orientierte Spurstücke derart durch im wesentlichen quer zur Radumfangsrichtung orientierte Verbindungsstücke außerhalb der Lauffläche des Fahrzeugrades mit seitlichen Halterungen verbunden sind, daß es beim Abrollen des mit ihr versehenen Fahrzeugrades zu Änderungen des Abstandes zwischen der Fahrbahnoberfläche und der Drehachse des Fahrzeugrades kommt, **dadurch gekennzeichnet**, daß die Länge der Spurstücke (5,6) der in Radumfangsrichtung jeweils aufeinanderfolgenden Spurkreuze (2,3) ungleich groß ist.

2. Gleitschutzkette nach Anspruch 1, **dadurch gekennzeichnet**, daß die Spurstücke (5,6) des Spurkreuze (2,3) mindestens drei verschiedene Längen haben.

3. Gleitschutzkette nach Anspruch 2, **dadurch gekennzeichnet**, daß Spurkreuze (2,3) mit Spurstücken (5,6) ungleicher Länge in unregelmäßiger Reihenfolge über den Radumfang verteilt sind.

## Claims

1. Antiskid chain for vehicle wheels, which has a tread system comprising track crosspieces, whose track portions oriented essentially in the circumferential direction of the wheel are connected outside the tread surface of the vehicle wheel, by connecting pieces oriented essentially transversely to the circumferential direction of the wheel, to side fastenings in such a manner that, as the vehicle wheel fitted with said chain rotates, changes occur in the distance between the roadway surface and the axis of rotation of the vehicle wheel, characterized in that the lengths of the track portions (5, 6) of the track crosspieces (2, 3) following one another in each case in the circumferential direction of the wheel are unequal in magnitude.

2. Antiskid chain according to Claim 1, characterized in that the track portions (5, 6) of the track crosspieces (2, 3) have at least three different lengths.

3. Antiskid chain according to Claim 2, characterized in that track crosspieces (2, 3) having track portions (5, 6) of unequal lengths are distributed in an irregular sequence over the circumference of the wheel.

## Revendications

1. Chaîne anti-patinage pour roues de véhicule, comportant un réseau de roulement constitué de croisillons dont les élements sont orientés essentiellement dans la direction de la périphérie de la roue et sont reliés par des pièces de liaison orientées essentiellement transversalement à la direction de la péripherie de la roue avec des organes de maintien latéraux à l'extérieur de la surface de roulement de la roue du véhicule, de telle sorte que pendant le roulement de la roue du véhicule pourvue de ces éléments il se produise des changements de l'écartement entre la surface de la chaussée et l'axe de rotation de la roue du véhicule, caractérisée en ce que la longueur des pièces de roulement (5,6) des croisillons (2,3) qui se succèdent les uns après les autres dans la direction de la péripherie de la roue est variable.

2. Chaîne anti-patinage selon la revendication 1, caractérisée en ce que les pièces de roulement (5,6) des croisillons (2,3) présentent au moins trois longueurs différentes.

3. Chaîne anti-patinage selon la revendication 2, caractérisée en ce que les croisillons (2,3) sont distribués sur la périphérie de la roue avec des pièces de roulement (5,6) de longueurs inégales et suivant une succession irrégulière.
